(19)

**Europäisches Patentamt**
**European Patent Office**
**Office européen des brevets**

(11) **EP 2 582 181 B1**

(12) **EUROPEAN PATENT SPECIFICATION**

(45) Date of publication and mention
of the grant of the patent:
**25.06.2014 Bulletin 2014/26**

(51) Int Cl.:
**H04W 40/24** (2009.01)  **H04L 12/715** (2013.01)
**H04W 84/18** (2009.01)

(21) Application number: **11185259.6**

(22) Date of filing: **14.10.2011**

(54) **Method for reducing a time period to collect data from nodes of a wireless mesh communications network**

Verfahren zur Reduzierung eines Zeitraums zum Sammeln von Daten aus Knoten eines drahtlosen Maschenkommunikationsnetzwerks

Procédé pour réduire la période de collecte de données depuis des n'uds d'un réseau de communications maillé sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2013 Bulletin 2013/16**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Gresset, Nicolas**
**35708 Rennes (FR)**
• **Mottier, David**
**35708 Rennes (FR)**

(74) Representative: **Maillet, Alain et al**
**Cabinet Le Guen & Maillet**
**5, place Newquay**
**B.P. 70250**
**35802 Dinard Cedex (FR)**

(56) References cited:
• HA R W ET AL: "SS-trees: a cross-layer organizational approach for mesh-based wide-area wireless sensor networks", BROADBAND NETWORKS, 2005 2ND INTERNATIONAL CONFERENCE ON BOSTON, MA OCT. 3-7, 2005, PISCATAWAY, NJ, USA,IEEE, 3 October 2005 (2005-10-03), pages 885-894, XP010890301, DOI: 10.1109/ICBN.2005.1589692 ISBN: 978-0-7803-9276-2
• ABDELMALIK BACHIR ET AL: "MAC Essentials for Wireless Sensor Networks", IEEE COMMUNICATIONS SURVEYS, IEEE, NEW YORK, NY, US, vol. 12, no. 2, 1 April 2010 (2010-04-01), pages 222-248, XP011334494, ISSN: 1553-877X, DOI: 10.1109/SURV. 2010.020510.00058
• PENG LIN ET AL: "Medium access control with a dynamic duty cycle for sensor networks", WIRELESS COMMUNICATIONS AND NETWORKING CONFERENCE, 2004. WCNC. 2004 IE EE ATLANTA, GA, USA 21-25 MARCH 2004, PISCATAWAY, NJ, USA,IEEE, vol. 3, 21 March 2004 (2004-03-21), pages 1534-1539, XP010708133, ISBN: 978-0-7803-8344-9
• PARADIS L ET AL: "A data collection protocol for real-time sensor applications", PERVASIVE AND MOBILE COMPUTING, ELSEVIER, NL, vol. 5, no. 4, 1 August 2009 (2009-08-01), pages 369-384, XP026144205, ISSN: 1574-1192, DOI: 10.1016/J.PMCJ.2009.04.003 [retrieved on 2009-05-03]

EP 2 582 181 B1

## Description

The present invention generally relates to collecting data in a wireless mesh communications network and more particularly to reducing the time period needed to collect such data in a wireless mesh communications network subject to variations in the transmission conditions.

Wireless Sensor Networks (WSNs) have gained interest and popularity for being self-configuring, rather inexpensive, and useful for a very wide range of possible applications, such as energy control, environmental monitoring, industrial automation...

Smart Meter Networks (SMNs) is an application example of such Wireless Sensor Networks. A smart meter is usually an electrical meter that records consumption of electric energy in intervals of a given period and communicates that information to a server for monitoring and billing purposes. Smart meters are usually able to receive commands from a central system. Smart meters are also used in other data capturing domains and can for instance also mean devices measuring natural gas or water consumption.

A data gathering device is typically implemented in such SMNs in the form of a server. The data gathering device collects data provided by the smart meters and processes the collected data, for instance for statistics and/or monitoring and/or billing purposes. For collecting such data, the data gathering device defines a scheduling sequence and transmits, according to the defined scheduling sequence, a request to each smart meter of the SMN for requesting said smart meter to provide said data to the data gathering device. In order to avoid collision in the propagation of messages throughout the SMN, the scheduling sequence is such that the data gathering device waits for receiving a response to a transmitted request before transmitting a new request to another smart meter. In response to the request, each smart meter transmits a response comprising said requested data. The requested data are for instance metering data obtained by the smart meter during measurements of water, gas or electric energy. The transmissions of requests and responses in the SMN are typically performed along a spanning tree, which defines the routing in the SMN

However, when there are transmission issues due to variations in the transmission conditions, such as a wireless link in the SMN that is temporarily no more operational, the transmissions of requests and responses may be delayed.

Generally, when such a transmission issue occurs, the routing in the SMN is modified. It means that new routes are defined and that the spanning tree is accordingly modified and propagated in the SMN so that all the nodes of the wireless mesh communications network are aware of the spanning tree modifications. This redefinition of the routes is time consuming and the time period needed to collect the data is therefore increased.

The document "SS-Trees: A Cross-layer Organizational Approach for Mesh-base Wide-area Wireless Sensor Networks", Rick W, Ha et al, 2nd IEEE International Conference on Broadband Networks, Oct. 2005, discloses a mechanism to schedule sleep and active time periods in mesh-based wireless sensor networks. The mechanism proposes to divide the network nodes into plural groups, wherein each group follows its own sleep schedule such that the active periods of each group alternate.

The aforementioned problems may also occur in wireless mesh communications networks of other kind, not specifically being related to the deployment of smart meters.

It is desirable to overcome the aforementioned problems which occur in typical wireless mesh communications networks.

In particular, it is desirable to provide a solution that allows reducing the time needed to collect data by a gathering device in a wireless mesh communications network subject to variations in the transmission conditions.

It is furthermore desirable to provide a solution that allows avoiding reconfiguring the routing, along a spanning tree, in the wireless mesh communications network when transmission issues are detected.

It is furthermore desirable to provide a solution that is easy-to-implement and that is cost-effective.

To that end, the present invention concerns a method for reducing a time period needed by a data gathering device to collect data from nodes of a wireless mesh communications network, communications between said data gathering device and said nodes being performed according to a spanning tree in the wireless mesh communications network. The method is such that said data gathering device performs: transmitting requests to said nodes in a first scheduling sequence for collecting said data, each request being addressed to at least one said node; detecting a transmission issue on one wireless link of the spanning tree; determining at least one route of the spanning tree comprising said wireless link on which the transmission issue has been detected; modifying the first scheduling sequence to obtain a second scheduling sequence, by postponing at least one request addressed to at least one respective node present on the at least one determined route comprising said wireless link on which the transmission issue has been detected, and by putting forward at least one request addressed to at least one respective node present on at least one route distinct from said at least one determined route comprising said wireless link on which the transmission issue has been detected; and, continuing transmitting requests to said nodes according to the second scheduling sequence.

Thus, by postponing at least one request addressed to at least one respective node corresponding to a route impacted by the transmission issue, requests having a greater chance of transmission success are transmitted first according to the second scheduling sequence. No modification of the spanning tree is then necessary when the transmission issue is temporary, and thus the time period needed to collect the data by the data gathering device is reduced.

According to a particular feature, modifying the first scheduling sequence comprises: scheduling all the requests addressed to nodes corresponding to the at least one determined route comprising said wireless link on which the transmission issue has been detected after all the other requests.

Thus, modifying the scheduling sequence is easy to manage.

According to a particular feature, modifying the first scheduling sequence comprises postponing by a shifting value each request addressed to a node corresponding to one of the at least one determined route comprising said wireless link on which the transmission issue has been detected.

Thus, modifying the scheduling sequence is more optimally performed in order to further limit the extra latency in collecting the data for the nodes concerned by the detected transmission issue.

According to a particular feature, modifying the first scheduling sequence comprises postponing by a common shifting value each request addressed to at least one respective node corresponding to the at least one determined route comprising said wireless link on which the transmission issue has been detected.

According to a particular feature, the shifting value is expressed as an index shift when each request in a considered scheduling sequence is indexed, or the shifting value is expressed as a time delay when each request in a considered scheduling sequence is associated with an instant at which said request is scheduled for transmission by the data gathering device.

Thus, modifying the scheduling sequence can be done in an easy-to-implement way using index management or more accurately using timing definitions.

According to a particular feature, the data gathering device performs: applying a time delay to each request addressed to a node corresponding to one of the at least one determined route comprising said wireless link on which the transmission issue has been detected; determining which request among the other requests may be scheduled before expiring of the time delay; and, scheduling said determined request in the scheduling sequence before each request addressed to a node corresponding to one of the at least one determined route comprising said wireless link on which the transmission issue has been detected.

Thus, the scheduling sequence is optimized.

According to a particular feature, the data gathering device performs: associating with each request an information indicating whether the request may be put forward; updating said information for each request addressed to a node corresponding to one of the at least one determined route comprising said wireless link on which the transmission issue has been detected; and determining, when modifying the first scheduling sequence, which request is allowed for being put forward on the basis of said information.

Thus, putting forward a request that has been previously postponed may be avoided.

According to a particular feature, the data gathering device performs: associating with each request a constraint indicating whether the request may be put forward and, if the request may be put forward, by how many units said request may be put forward ; determining, when modifying the first scheduling sequence, which request is allowed for being put forward on the basis of said constraint; and updating said constraint for each request that has been postponed or put forward in the modifying of the first scheduling sequence to obtain the second scheduling sequence.

Thus, putting forward a request that has been previously postponed limited to cases for which the risk of transmission issue in transmitting said request according to the modified scheduling sequence is reduced, because it still meets the minimum shifting value defined when the request has been previously postponed.

According to a particular feature, the data gathering device performs, for each node : determining statistics representing, in a sliding time window, a ratio of successful transmissions via or to said node; comparing the determined statistics with a predetermined value; and modifying the shifting value according to the result of the comparing.

Thus, the scheduling sequence may be optimally modified as a function of variations of the transmission conditions.

According to a particular feature, said data gathering device performs: receiving a wireless link failure report generated by one node, said report comprising an indication of a wireless link via which said request has been attempted to be relayed by said node having generated the report, and said report being representative of a transmission failure that occurred, on said wireless link indicated in the report or in the spanning tree portion corresponding to the child sub-tree of said wireless link indicated in the report, during a transmission of one of said requests or a response to one of said requests; and said routes are determined to be the routes including any node of said child sub-tree.

Thus, the routes concerned by the transmission failure are easily identified.

According to a particular feature, said wireless link failure report is generated by a node when a layer of said node receives, from the medium access control layer of said node, a notification indicating that said request attempted to be relayed generated in response at least one non-acknowledgement.

Thus, when the transmission issue occurs during the transmission of one of said request, the portion of the spanning tree which is identified as impacted by the transmission failure is limited to the wireless link on which the transmission issue occurred and to the child sub-tree of this wireless link.

According to a particular feature, said wireless link failure report is generated by a node when a timeout expires without said node receiving a response nor another wireless link failure report, from a node to which one of said request is addressed, to said request with which the timeout is associated.

Thus, when the transmission failure occurs during the transmission of a response to one of said request, the portion of the spanning tree which is identified as impacted by the transmission issue is limited to the wireless link on which the transmission issue occurred and to the child sub-tree of this wireless link.

According to a particular feature, said timeout is set up by at least taking into account the number of hops in the spanning tree, between the node setting up said timeout and the node to which the request associated with said timeout is addressed.

Thus, the timeout setup is adapted according to the remaining route of the request, and of its response, up to the node to which the request is addressed, in order to further reduce the time period needed to collect the data. The method is also more reactive for detecting transmission issues and the time period needed to collect data by the data gathering device is therefore further reduced.

According to a particular feature, the node generating the wireless link failure report performs: checking whether said node generating the wireless link failure report already responded to one of said requests; and, including in the wireless link failure report its own data to be collected by said device, when said node generating the wireless link failure report did not already respond to one of said requests.

Thus, by anticipating the transmission of data to be collected, the time period needed to collect data by the data gathering device is further reduced.

The present invention also concerns a device for reducing a time period needed by said device to collect data from nodes of a wireless mesh communications network, communications between said device and said nodes being performed according to a spanning tree in the wireless mesh communications network. The device comprises: means for transmitting requests to said nodes in a first scheduling sequence for collecting said data, each request being addressed to at least one said node; means for detecting a transmission issue on one wireless link of the spanning tree; means for determining at least one route of the spanning tree comprising said wireless link on which the transmission issue has been detected; means for modifying the first scheduling sequence to obtain a second scheduling sequence, by postponing at least one request addressed to at least one respective node present on the at least one determined route comprising said wireless link on which the transmission issue has been detected, and by putting forward at least one request addressed to at least one respective node present on at least one route distinct from said at least one determined route comprising said wireless link on which the transmission issue has been detected; and, means for continuing transmitting requests to said nodes according to the second scheduling sequence.

The present invention also concerns, in at least one embodiment, a computer program that can be downloaded from a communication network and/or stored on a medium that can be read by a computer and run by a processor. This computer program comprises instructions for implementing the aforementioned methods in any one of their various embodiments, when said program is run by the processor.

The present invention also concerns an information storage means, storing a computer program comprising a set of instructions that can be run by a processor for implementing the aforementioned methods in any one of their various embodiments, when the stored information is read by a computer and run by a processor.

Since the features and advantages related to the device and to the computer program are identical to those already mentioned with regard to the corresponding aforementioned methods, they are not repeated here.

The characteristics of the invention will emerge more clearly from a reading of the following description of an example of embodiment, said description being produced with reference to the accompanying drawings, among which:

Fig. 1 schematically represents a first architecture of a wireless mesh communications network in which the present invention may be implemented;

Fig. 2 schematically represents a second architecture of a wireless mesh communications network in which the present invention may be implemented;

Fig. 3 schematically represents a spanning tree defined in the wireless mesh communications network of Fig. 1;

Fig. 4A schematically represents an architecture of a concentrator device of the wireless mesh communications network of Fig. 1 or 2;

Fig. 4B schematically represents an architecture of a server device of the wireless mesh communications network of Fig. 2;

Fig. 4C schematically represents an architecture of a smart meter of the wireless mesh communications network of Fig. 1 or 2;

Fig. 5 schematically represents an algorithm performed by a data gathering device of the wireless mesh communications network of Fig. 1 or 2 for collecting data from smart meters;

Fig. 6 schematically represents an algorithm performed by a smart meter of the wireless mesh communications network of Fig. 1 or 2, or by a concentrator device of the wireless mesh communications network of Fig. 2;

Fig. 7A schematically represents a first example of sequence for scheduling data collecting phases for collecting data from smart meters of the wireless mesh communications network of Fig. 1 or 2;

Fig. 7B schematically represents a sequence for scheduling data collecting phases for collecting data from the smart meters resulting from a modification of the first example schematically represented in Fig. 7A;

Fig. 8A schematically represents a second example of sequence for scheduling data collecting phases for collecting data from smart meters of the wireless mesh communications network of Fig. 1 or 2;

Fig. 8B schematically represents a sequence for scheduling data collecting phases for collecting data from the smart meters resulting from a modification of the second example schematically represented in Fig. 8A;

Fig. 8C schematically represents a third example of sequence for scheduling data collecting phases for collecting data from smart meters of the wireless mesh communications network of Fig. 1 or 2;

Fig. 8D schematically represents a sequence for scheduling data collecting phases for collecting data from the smart meters resulting from a modification of the third example schematically represented in Fig. 8C;

Fig. 9 schematically represents a first algorithm performed by the data gathering device of the wireless mesh communications network of Fig. 1 or 2 for modifying scheduling sequences;

Fig. 10 schematically represents a second algorithm performed by the data gathering device of the wireless mesh communications network of Fig. 1 or 2 for modifying scheduling sequences.

Even though the following description details the present invention in the scope of a deployment of wireless mesh communications networks of smart meters, the principles detailed hereinafter may be similarly applied in the deployment of other kinds of wireless mesh communications networks. For instance, the principles detailed hereinafter may be similarly applied in a deployment of femtocells, i.e. a deployment of cellular base stations typically designed for use in a home or small office allowing service providers to extend service coverage indoors, especially where access would otherwise be limited or unavailable.

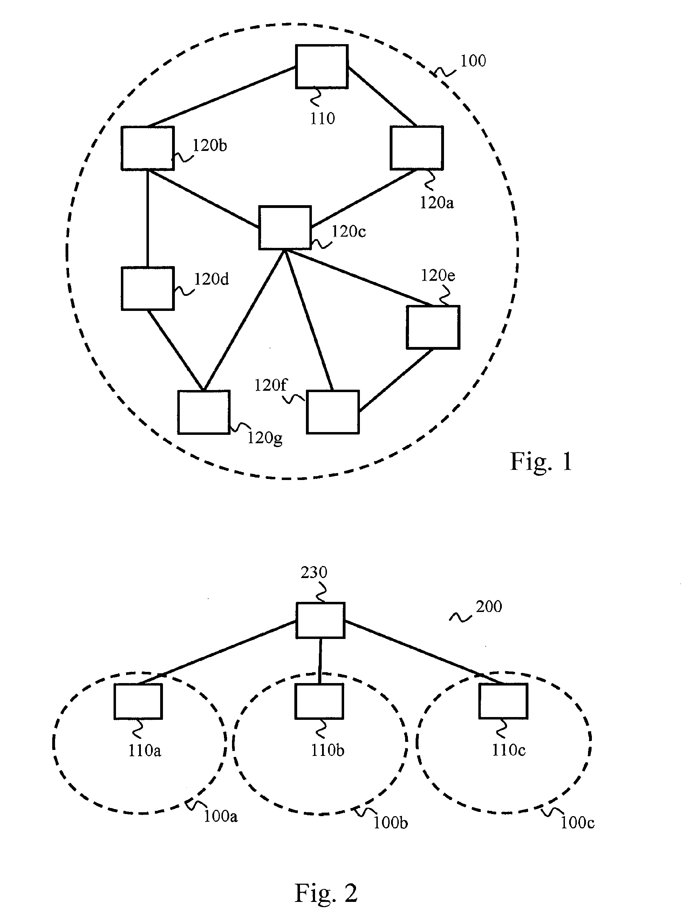

**Fig. 1** schematically represents a first architecture of a wireless mesh communications network 100 in which the present invention may be implemented.

The wireless mesh communications network 100 comprises a concentrator device 110 and a set of smart meters, also referred to as smart metering devices. Seven smart meters 120i, wherein i = a, b,..., g, are shown in Fig. 1. A different plurality of smart meters may be present in the wireless mesh communications network 100. The communications network 100 is also referred to as cluster.

The concentrator device 110 and the smart meters may also be referred to as *nodes, communication nodes* or *network nodes.*

The devices of the wireless mesh communications network 100 preferably use half-duplex wireless communications. The devices of the wireless mesh communications network 100 may however use full-duplex wireless communications.

Such a wireless mesh communications network is particularly adapted to a deployment of smart meters in *ad-hoc* fashion.

In order to limit the power consumption and the radiations, the devices in the wireless mesh communications network 100 cannot communicate directly with any other device in the wireless mesh communications network 100. Each device in the wireless mesh communications network 100 is usually able to communicate directly with only few other devices in the wireless mesh communications network 100. It means that, for these few other devices, the transmission signal strength is considered sufficiently high, *e.g.* above a predetermined threshold, for setting up a wireless link for exchanging synchronization signals, messages and more generally data.

Each device of the wireless mesh communications network 100 is therefore able to communicate directly with at least one other device of the wireless mesh communications network 100.

Two devices of the wireless mesh communications network 100 communicating directly together are neighbouring devices.

Any couple of devices of the wireless mesh communications network 100 can communicate together, either directly or indirectly, *i.e.* via at least one other device of the wireless mesh communications network 100. More particularly, each smart meter 120i, wherein i = a, b,..., g, can communicate with the concentrator device 110, either directly or indirectly.

In Fig. 1, possible direct communications, referred to hereinafter as *wireless links,* are illustratively represented by respective straight lines between the concerned devices. For instance: the concentrator device 110 has two neighbouring devices, which are the smart meters 120a, 120b; the smart meter 120a has two neighbouring devices, which are the smart meter 120c and the concentrator device 110; and the smart meter 120b has three neighbouring devices, which are the smarts meters 120c, 120d and the concentrator device 110. Fig. 1 illustratively shows other possible direct communications in the wireless mesh communications network 100, but they are not further detailed herein.

The communications in the wireless mesh communications network 100 are preferably performed using CSMA (Carrier sense multiple access). The communications in the wireless mesh communications network 100 may also be performed using TDMA, FDMA or CDMA (*Code Division Multiple Access*). The communication protocol between neighbouring nodes might include acknowledgements (ACK) and non acknowledgments (NACK) in order to allow several transmission attempts before concluding to a communication failure between the two neighbouring nodes. Typically such an acknowledgement based protocol is performed at MAC (*Medium Access Control*) layer.

In the scope of the wireless mesh communications network 100, the concentrator device 110 acts as a data gathering device. The concentrator device 110 collects the data provided by the smart meters and processes the collected data, for instance for statistics and/or monitoring and/or billing purposes. For collecting such data, the concentrator device 110 transmits a request to each smart meter 120i, wherein i = a, b,..., g, for requesting said smart meter 120i to provide said data to the concentrator device 110. In response to the request, each smart meter 120i transmits a response comprising said requested data. The requested data are for instance metering data obtained by the smart meter 120i during measurements of water, gas or electric energy. The concentrator device 110 may request other kind of data to the smart meters, such as status information, measurement history or error reporting.

**Fig. 2** schematically represents a second architecture of a wireless mesh communications network 200 in which the present invention may be implemented.

The wireless mesh communications network 200 comprises a server device 230 and a set of concentrator devices. Three concentrator devices 110m, wherein m = a, b or c, are shown in Fig. 2. A different plurality of concentrator devices may be present in the wireless mesh communications network 200.

Each concentrator device 110m communicates directly with the server device 230. The communications between the concentrator devices 110m and the server device 230 are preferably performed using the Internet Protocol (IP), as detailed by the RFC 791 specification, and may be either wired or wireless.

Each concentrator device 110m is part of a cluster 100m, wherein m = a, b or c, which corresponds to the wireless mesh communications network 100 shown in Fig. 1. The concentrator devices 110m act as gateways between the server device 230 and the smart meters of the respective clusters 100m to which said concentrator devices 110m respectively belong.

In the architecture shown in Fig. 2, each smart meter belongs to only one cluster and communicates with the server device 230 via a single concentrator device 110m.

In the architecture shown in Fig. 2, the clusters 100m are connected to the server device 230 via respective concentrator devices 110m using a star topology network.

The server device 230 may transmit commands to any smart meter via a concentrator device 110m. Such commands are for instance for requesting some reporting from the smart meter, for instructing a shutdown of a system monitored by the smart meter, for providing a software update to the smart meter...

In the scope of the mesh communications network 200, the server device 230 acts as the data gathering device. The server device 230 therefore transmits a request to each smart meter to collect the data to be gathered.

The data gathering device, whether it corresponds to the concentrator device 110 of the wireless mesh communications network 100 or to the server device 230 of the wireless mesh communications network 200, collects the data to be gathered according to a sequence of collecting phases. The messages exchanged during these collecting phases are propagated in the wireless mesh communications network 100 or 200 along a spanning tree.

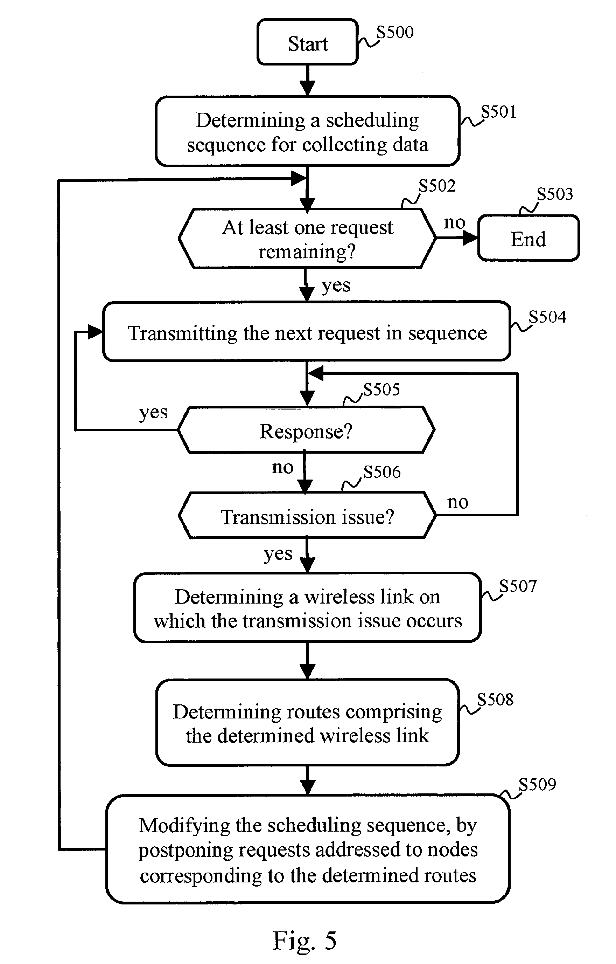

The sequence is subject to dynamic adjustments, as detailed hereafter with regard to Fig. 5. Such adjustments aim at reducing the time period needed to collect the data by the data gathering device, avoiding any modification of the spanning tree. If, however, a predetermined number of unsuccessful attempts to communicate with a smart meter for collecting the data is reached, the data gathering device may decide modifying the data routing throughout the wireless mesh communications network, *i.e.* modifying the spanning tree.

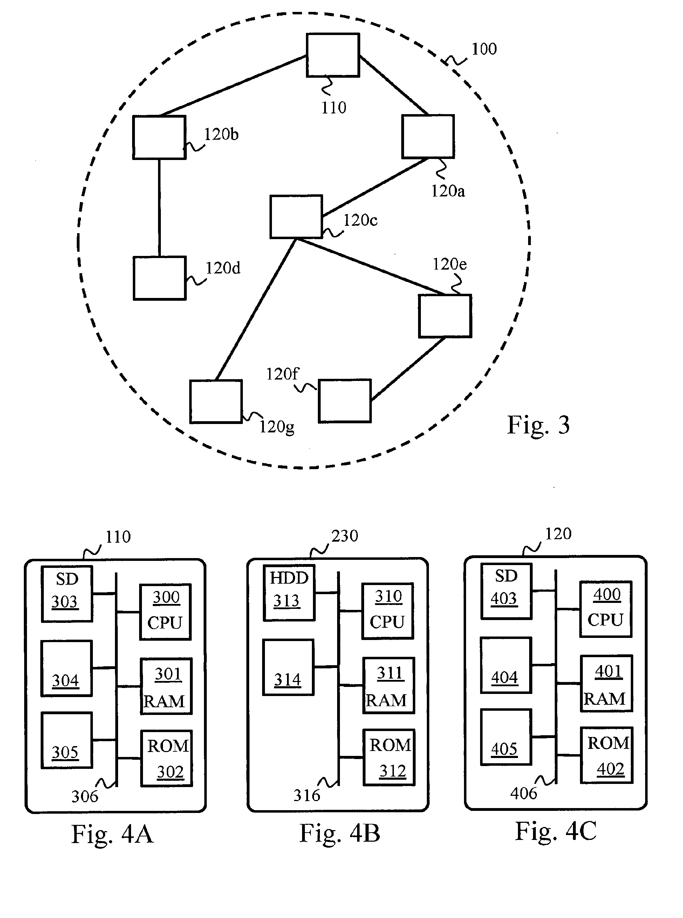

**Fig. 3** schematically represents a spanning tree defined in the wireless mesh communications network 100. Spanning trees may similarly be defined for the clusters 100a, 100b, 100c of the wireless mesh communications network 200. A single spanning tree may also be defined for the whole wireless mesh communications network 200.

For collecting data provided by the smart meters, the data gathering device uses such a spanning tree. In other words, the request transmitted by the data gathering device to the smart meters and the responses respectively transmitted by the smart meters to the data gathering device are propagated along the spanning tree.

The spanning tree shown in Fig. 3 consists in a subset of the wireless links of the wireless mesh communications network 100. Each spanning tree comprises a root node. The root node of the spanning tree is the data gathering device, *i.e.* the concentrator device 100 in the scope of the wireless mesh communications network 100. The spanning tree is defined so that every node of the wireless mesh communications network 100 lies in the spanning tree, but no loops are formed.

According to the spanning tree shown in Fig. 3: the concentrator device 100 communicates with the smart meter 120d via the smart meter 120b; the concentrator device 100 communicates with the smart meter 120c via the smart meter 120a; the concentrator device 100 communicates with the smart meter 120g via the smart meter 120a and 120c; the concentrator device 100 communicates with the smart meter 120e also via the smart meter 120a and 120c; and the concentrator device 100 communicates with the smart meters 120f via the smart meter 120a, 120c and 120e.

Each wireless link in a spanning tree is set up between a parent node and a child node. The parent node is the node that necessitates a smaller number of hops to reach the root of the spanning tree. For instance, considering the wireless link between the smart meters 120a and 120c, the smart meter 120a is the parent node and the smart meter 120c is the child node.

Each node of the wireless mesh communications network 100 is aware of the spanning tree in use. Each node may only be aware of the spanning tree portion that includes itself, its child sub-tree and its parent in the spanning tree. A child sub-tree with reference to one node refers to the portion of the spanning tree that includes all the children nodes of the considered node and their respective child sub-trees, if any. For instance, in the spanning tree shown in Fig. 3, the child sub-tree of the node 120c includes two branches, the first one comprising the node 120g and the second one comprising the node 120e and its child node 120f A child sub-tree with reference to one wireless link between a parent node and a child node refers to the portion of the spanning tree that includes said child node and the child sub-tree of said child node, if any. For instance, in the spanning tree shown in Fig. 3, the child sub-tree of the wireless link between the nodes 120a and 120c includes the node 120c and two branches, the first one comprising the node 120g and the second one comprising the node 120e and its child node 120f.

The spanning tree defines routes between the data gathering device, which is the root node of the spanning tree, and any other node of the wireless mesh communications network. Each route may only consist in the successive wireless links from the data gathering device to the considered smart meter, when each wireless link is reciprocal in terms of channel conditions. The route may consist in the successive wireless links from the server device 230 to the concerned smart meter and from concerned smart meter to the server device 230, when the wireless links are not reciprocal in terms of channel conditions.

Many algorithms and protocols are known by the one ordinary skilled in the art to build spanning trees from a wireless mesh communications network. Even though the present invention can be implemented in the context of dynamically changing spanning trees, it aims at limiting and even avoiding modifying the routing between nodes of the wireless communications network and the spanning tree may then be pre-set. Therefore the building of spanning tree won't be further detailed herein.

**Fig. 4A** schematically represents an architecture of the concentrator device 110. The concentrator device 110 may correspond to any concentrator device 110m, wherein m = a, b or c with reference to Fig. 2.

According to the shown architecture, the concentrator device 110 comprises the following components interconnected by a communications bus 306: a processor, microprocessor, microcontroller or CPU (*Central Processing Unit*) 300; a RAM (*Random-Access Memory*) 301; a ROM (*Read-Only Memory*) 302; an SD (*Secure Digital*) card reader 303, or any other device adapted to read information stored on storage means; a first communication interface 304 and a second communication interface 305.

The first communication interface 304 allows the concentrator device 110 to wirelessly communicate with neighbouring smart meters in the wireless mesh communications network 100.

The second communication interface 305 allows the concentrator device 110 to communicate with the server 230.

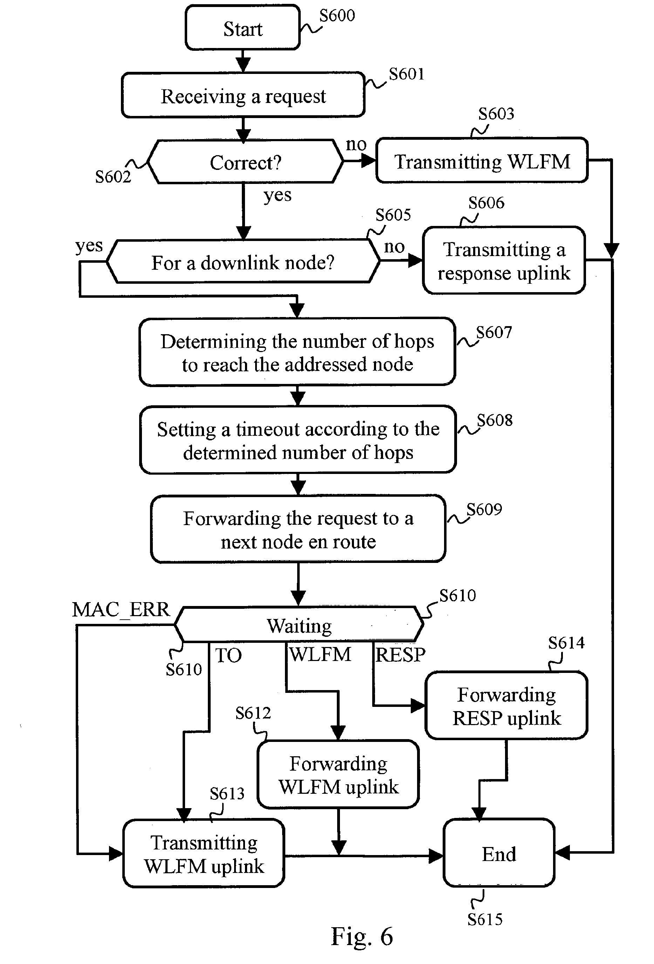

CPU 300 is capable of executing instructions loaded into RAM 301 from ROM 302 or from an external memory, such as an SD card. After the concentrator device 110 has been powered on, CPU 300 is capable of reading instructions from RAM 301 and executing these instructions. The instructions form one computer program that causes CPU 300 to perform some or all of the steps of the algorithms described hereafter with regard to Fig. 6, or to Figs. 5, 9 and 10 when the concentrator device 110 acts as the data gathering device.

Any and all steps of the algorithms described hereafter with regard to Fig. 6, or to Figs. 5, 9 and 10 when the concentrator device 110 acts as the data gathering device, may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field Programmable Gate Array*) or an ASIC (*Application-Specific Integrated Circuit*).

**Fig. 4B** schematically represents an architecture of the server device 230.

According to the shown architecture, the server device 230 comprises the following components interconnected by a communications bus 316: a processor, microprocessor, microcontroller or CPU 310; a RAM 311; a ROM 312; an HDD (*Hard Disk Drive*) 313, or any other device adapted to read information stored on storage means; a communication interface 314.

The communication interface 314 allows the server device 230 to communicate with the concentrator devices 110a,110b, 110c.

CPU 310 is capable of executing instructions loaded into RAM 311 from ROM 312 or from an external memory, such as the HDD 313. After the server device 230 has been powered on, CPU 310 is capable of reading instructions from RAM 311 and executing these instructions. The instructions form one computer program that causes CPU 310 to perform some or all of the steps of the algorithms described hereafter with regard to Figs. 5, 9 and 10.

Any and all steps of the algorithms described hereafter with regard to Fig. 5, 9 and 10 may be implemented in software by execution of a set of instructions or program by a programmable computing machine, such as a PC, a DSP or a microcontroller; or else implemented in hardware by a machine or a dedicated component, such as an FPGA or an ASIC.

**Fig. 4C** schematically represents an architecture of a smart meter 120. The smart meter 120 corresponds to any smart meter 120i, wherein i = a, b,..., g with reference to Fig. 1.

According to the shown architecture, the smart meter 120 comprises the following components interconnected by a communications bus 406: a processor, microprocessor, microcontroller or CPU 400; a RAM 401; a ROM 402; an SD card reader 403, or any other device adapted to read information stored on storage means; a communication interface 404; and a metering interface 405.

The first communication interface 404 allows the smart meter 120 to wirelessly communicate with any neighbouring device in the wireless mesh communications network 100 or 200, said neighbouring device being either another smart meter or a concentrator device.

The metering interface 405 allows the smart meter 120 to perform monitoring, measurements and data captures, such as electrical or water consumption data. The metering interface 405 allows the smart meter 120 to transmit commands to the monitored system.

CPU 400 is capable of executing instructions loaded into RAM 401 from ROM 402 or from an external memory, such as an SD card. After the smart meter device 120 has been powered on, CPU 400 is capable of reading instructions from RAM 401 and executing these instructions. The instructions form one computer program that causes CPU 400 to perform some or all of the steps of the algorithms described hereafter with regard to Fig. 6.

Any and all steps of the algorithm described hereafter with regard to Fig. 6 may be implemented in software by execution of a set of instructions or program by a programmable computing machine, such as a PC, a DSP or a microcontroller; or else implemented in hardware by a machine or a dedicated component, such as an FPGA or an ASIC.

**Fig. 5** schematically represents an algorithm performed by the data gathering device for collecting data. The data gathering device is the server device 230 in the scope of the communications network 200 and the concentrator device 110 in the scope of the communications network 100. Let's consider in the following that the data gathering device is the server device 230. The algorithm starts in a step S500.

In a following step S501, the server device 230 determines a scheduling sequence of collecting phases for collecting the data. The server device 230 may arbitrarily define the sequence or apply a default sequence.

The server device 230 preferably requests the data to be gathered to one smart meter at a time. The server device 230 may however request the data to be gathered to several smart meters at a time. It means that the server device 230 preferably waits for receiving a response, or a transmission failure notification, to a request before initiating another request.

The server device 230 may however request the data to be gathered to several smart meters at a time, but not all at once. According to a first example, in the spanning tree shown in Fig. 3, the server device 230 may simultaneously request the data to be gathered to the smart meters 120c, 120e, 120f and 120g, which are in the child sub-tree of the smart meter 120a. To achieve this, the server device 230 may transmit a request for collecting said data, said request comprising a request identifier indicating that the request concerns the collecting of data for a portion of the spanning tree, as well as an identifier of the smart meter 120c. When it receives such a request, the smart meter 120c forwards the request to the smart meter 120g and to the smart meter 120e, and transmits a response comprising its own data toward the server device 230. Therefore, the server device 230 may request the data to be gathered to a portion of the spanning tree, which corresponds to all the nodes that are in the child sub-tree of a given node, or in the child sub-tree of a given link. According to a second example, in the spanning tree shown in Fig. 3, the server device 230 may request the data to be gathered to the smart meter 120d then to the smart meter 120f without waiting for any response from the smart meter 120d. Therefore, the server device 230 may request, in overlapping data collecting phases, the data to be gathered to smart meters in different branches of the spanning tree. Addressing smart meters in different branches of the spanning tree limits the potential transmission collisions in the transmission of data, compared to requesting data to smart meters for which the respective routes share a common wireless link.

It is considered hereinafter that the server device 230 requests the data to be gathered to one smart meter at a time.

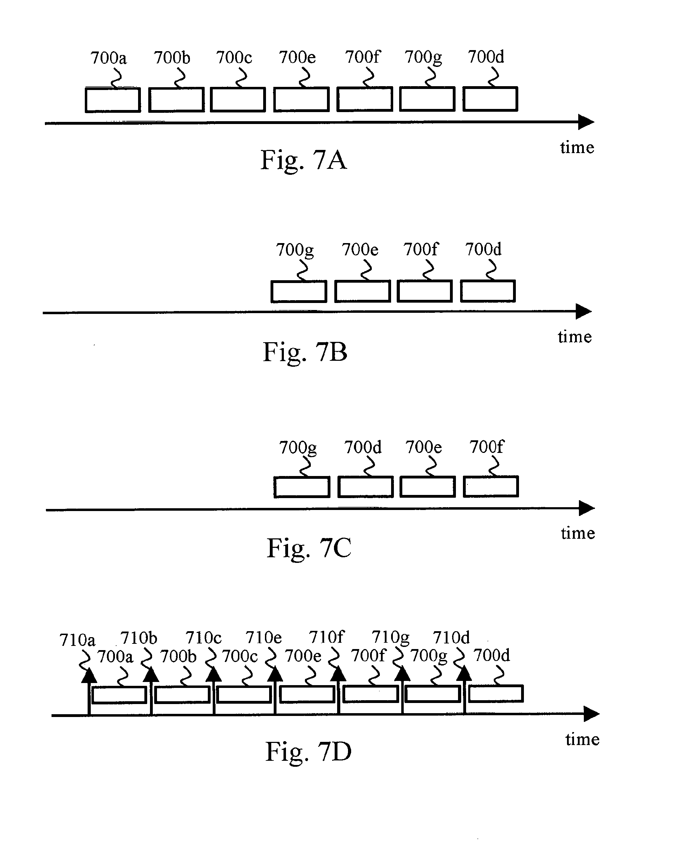

For instance, the server device 230 determines a scheduling sequence as shown in Fig. 7A.

**Fig. 7A** shows a scheduling sequence comprising:

- a data collecting phase 700a for requesting data to the smart meter 120a; then
- a data collecting phase 700b for requesting data to the smart meter 120b; then
- a data collecting phase 700c for requesting data to the smart meter 120c; then
- a data collecting phase 700e for requesting data to the smart meter 120e; then
- a data collecting phase 700f for requesting data to the smart meter 120f; then
- a data collecting phase 700g for requesting data to the smart meter 120g; then
- a data collecting phase 700d for requesting data to the smart meter 120d.

Each data collecting phase 700i, wherein i = a, b,..., g, comprises the downlink transmission of a request for collecting data from the gathering device to the smart meter 120i, and the uplink transmission of a response to said request for gathering data from the smart meter 120i to the gathering device. The terms *downlink* and *uplink* transmissions of a message are used with reference to the propagation of the message along the spanning tree compared to the position of the root node of the spanning tree, *i.e.* a message propagated toward the root node is considered as being transmitted *uplink* and is considered as being transmitted *downlink* when propagated in the reverse direction.

Back to Fig. 5, in a following step S502, the server device 230 checks whether at least one request remains to be transmitted according to the scheduling sequence in use. When at least one request remains to be transmitted according to the scheduling sequence in use, the server device 230 performs a step S504; otherwise, the algorithm ends in a step S503.

In the step S504, the server device 230 transmits the next request in sequence, according to the scheduling sequence in use. For instance, when the response corresponding to the data collecting phase 700a has been received by the server device 230, the next request in sequence is addressed to the smart meter 120b, according to the scheduling sequence of Fig. 7A.

Each request for collecting data, which is transmitted by the server device 230 along the spanning tree, is a message comprising at least an identifier indicating that the message is such a request for collecting data and which type of data is expected to be received in response and an identifier of the smart meter, or of the smart meters, to which the request is addressed.

In a following step S505, the server device 230 checks whether a response to the request transmitted in the step S504 is received. When such a response is received, the server device 230 stores the data collected from the concerned smart meter and repeats the step S504 by transmitting the next request in sequence, according to the scheduling sequence in use. Otherwise, the server device 230 performs a step S506.

In the step S506, the server device 230 checks whether there is a transmission issue.

Such a transmission issue may be detected following a wireless link failure message (WLFM) received by the server device 230 from one node of the wireless mesh communications network, as detailed hereinafter with regard to Fig. 6.

When there is a transmission issue, the server device 230 performs a step S507; otherwise, the server device 230 repeats the step S505.

In the step S507, the server device 230 determines a wireless link on which the transmission issue is detected.

In a following step S508, the server device 230 determines each route in the spanning tree which comprises the wireless link for which a transmission issue has been detected in the step S506. In other words, the server device 230 identifies the smart meters that may be difficultly reached due to the transmission issue, when routing requests and responses according to the spanning tree currently defined.

In a following step S509, the server device 230 modifies the scheduling sequence by postponing requests addressed to smart meters corresponding to the routes determined in the step S508, and by putting forward at least one request addressed to a respective smart meter corresponding to a route which doesn't comprise the wireless link for which a transmission issue has been detected in the step S506.

Considering that all data collecting phases are indexed in the scheduling sequence, the modification of the scheduling sequence can be managed by increasing the index of each data collecting phase to be postponed and by decreasing the index of each data collecting phase to be put forward.

The set of data collecting phases to be postponed is preferably postponed in the same relative sequence order as defined in the preceding scheduling sequence. In other words, even though these data collecting phases are shifted in the scheduling sequence, the ordering of these data collecting phases is maintained relatively to each other. Their respective indexes are increased by a common shifting value.

**Fig. 7B** shows a modified scheduling sequence comprising:

- the data collecting phase 700g for requesting data to the smart meter 120g; then
- the data collecting phase 700e for requesting data to the smart meter 120e; then
- the data collecting phase 700f for requesting data to the smart meter 120f; then
- the data collecting phase 700d for requesting data to the smart meter 120d.

Modifying the scheduling sequence by postponing the data collecting phases 700e and 700f so that they are rescheduled just after the data collecting phase 700g, and by putting forward the data collecting phase 700g, results in reattempting the data collecting phases 700e and 700f once the data collecting phase 700g has ended, except if a transmission failure occurs during the data collecting phase 700g. If such a transmission failure occurs during the data collecting phase 700g, the scheduling sequence may be modified again by reattempting the data collecting phases 700e and 700f prior to the data collecting phase 700g. The time period necessary to collect the data is therefore reduced and no modification of the spanning tree is required when the duration of the transmission issue is short compared to the minimum time period necessary to collect the data from all smart meters.

According to another particular embodiment, if a transmission failure over one wireless link occurs in a data collecting phase, all data collecting phases that correspond to routes comprising said wireless link are postponed, in the same order, to the end of the scheduling sequence, and all other data collecting phases are put forward, in the same order. This is illustrated in Fig. 7C. According to this second example, the server device 230 modifies the scheduling sequence shown in Fig. 7A and obtains the scheduling sequence shown in Fig. 7B, in which it is considered that the data collecting phases 700a, 700b and 700c have been successfully performed.

**Fig. 7C** shows a modified scheduling sequence comprising:

- the data collecting phase 700g for requesting data to the smart meter 120g; then
- the data collecting phase 700d for requesting data to the smart meter 120d; then
- the data collecting phase 700e for requesting data to the smart meter 120e; then
- the data collecting phase 700f for requesting data to the smart meter 120f.

Modifying the scheduling sequence by postponing the data collecting phases 700e and 700f, and by putting forward the data collecting phases 700g and 700d, results in reordering the data collecting phases in order to request, first, data to be collected from nodes that are not concerned by the transmission issue on the wireless link between the smart meters 120a and 120c. The time period necessary to collect the data is therefore reduced and no modification of the spanning tree is required when the duration of the transmission issue is short compared to the minimum time period necessary to collect the data from all smart meters.

According to yet another particular embodiment, if a transmission failure over one wireless link occurs in a data collecting phase, all data collecting phases that correspond to routes comprising said wireless link are postponed, with the same relative index difference, and are shifted by a predetermined index increase.

The increase of index for the data collecting phases to be postponed may be predefined to a default value.

In a variant, the increase of index for the data collecting phases to be postponed may be adapted according to statistics about preceding variations in the transmission conditions in the wireless mesh communications network. In other words, the server device 230, for each node, determines statistics representing, in a sliding time window, a ratio of successful transmissions via or to said node, then compares the determined statistics with a predetermined value, and modifies the increase of index according to the result of the comparing. Let's consider a sliding time window having a predetermined width. The server device 230 may count the number of successful transmissions to or via each node during the sliding time window. The server device 230 may also count the number of unsuccessful transmissions to or via each node during the sliding time window, or the number of total transmission attempts to or via each node during the sliding time window. The server device 230 may then determine an average success of transmission to or via each node during the sliding time window. The server device 230 may then analyse the evolution of this average success of transmission over time. When this average success decreases compared to a preceding value, it means that the transmission conditions become less favourable and the server device 230 may decide increasing the value by which the index of data collecting phases to be postponed is shifted; and, when this average success increases compared to a preceding value, it means that the transmission conditions become more favourable and the server device 230 may decide decreasing the value by which the index of data collecting phases to be postponed is shifted. In a variant, when this average success is lower than a threshold value, it means that the transmission conditions are not favourable and the server device 230 may decide increasing the value by which the index of data collecting phases to be postponed is shifted; and, when this average success is equal to or greater than the threshold value, it means that the transmission conditions are favourable and the server device 230 may decide decreasing the value by which the index of data collecting phases to be postponed is shifted.

In another variant, the increase of index for the data collecting phases to be postponed may vary between two attempts for a data collecting phase. For instance, a failure is detected during a data collecting phase concerning a smart meter that is a leaf of the spanning tree, a leaf being a node with no child sub-tree. An index shift value S1 is then applied to postpone this data collecting phase and, on its turn according to the modified scheduling sequence, the data collecting phase is reattempted. If a failure is detected during this reattempt of the data collecting phase, an index shift value S2 is applied to postpone once again the data collecting phase, wherein S2 > S1.

In yet another variant, the increase of index for the data collecting phases to be postponed may be identical for all smart meters in a same geographical area. The server device 230 then maintains groups of smart meters according to their respective geographical locations. The geographical location of the smart meters may be obtained using a GPS or be pre-set at the system installation. Other mechanisms, for instance based on triangulation, may be implemented to determine the geographical location of the smart meters. A same increase of index may then be applied to all smart meters of a given geographical area. This increase of index may vary over time, as already described, but varies identically for all the smart meters of the given geographical area. The statistics mentioned here above may be determined for the route to a given node and applied to all the routes to nodes in the geographical area of said node. The server device 230 may also determine the statistics, in the sliding window, by computing a ratio of successful transmissions via or to any node of the given geographical area.

Back to Fig. 5, once it has modified the scheduling sequence, the server device 230 repeats the step S502 and therefore continues transmitting the request according to the modified scheduling sequence.

It has to be noticed that the algorithm of Fig. 5 is illustrative and may be modified without departing from the present invention. More particularly, the server device 230 may modify the scheduling sequence in use whereas no transmission failure occurs in the transmission of the last request or of its respective response, but a transmission failure has been detected during the transmission of another message between nodes or a decrease in a wireless link quality has been detected. Such a transmission failure or decrease in wireless link quality may then be reported by a node to the server device 230 independently of the data collecting phase 700i, wherein i = a, b,..., g, in progress.

In another embodiment, the scheduling sequence may define a timing for initiating the data collecting phase. Thus, the scheduling sequence may define an instant at which each data collecting phase is expected to start. **Fig. 7D** shows a scheduling sequence of successive data collecting phases 700i, wherein i = a, b,..., g, with respective data collecting phase starting instants 710i. The postponing of a data collecting phase may therefore be expressed in terms of time delay, then defining a new starting instant for the concerned data collecting phase.

The maximum allowed duration of each data collecting phase, *i.e.* the time difference between the starting instant of said data collecting phase and the starting instant of the next data collecting phase in sequence, can be specifically defined for said collecting phase, and may differ from the maximum allowed time duration of another data collecting phase. For instance, the maximum allowed time duration of a data collecting phase may be defined according to the length of the concerned route, and therefore be defined according to the number of hops in the concerned route multiplied by a per-hop time period reference value. The per-hop reference time period value corresponds to the maximum allowed time period to process a message by one node and to convey the message from said node to a neighbouring node.

The postponing of a data collecting phase may therefore be performed by adding a predetermined delay to the instant at which the data collecting phase was initially expected to end.

Then, the server device 230 may determine which data collecting phase(s) may fit within this delay, and put forward the determined data collecting phase(s) so that it is scheduled before the delayed data collecting phase in the modified scheduling sequence.

The delay to be applied may be predefined to a default value.

The delay may be deduced from propagation channel statistical properties. Indeed, for communications between fixed neighbouring nodes, the channel time fluctuations are caused by moving scatters. The correlation of the channel through time is a function of the position of the scatters and their speed, and as an approximation is a function of the carrier frequency $f_c$, the signal bandwidth, the speed of light $c$ and the equivalent velocity of the set of scatters $v$. A popular rule of thumb states that the coherence time is defined by the time delay providing a decorrelation of 0.5, which can be approximated by $0.423.c/(v.f_c)$. For example, when considering an average speed of the scatters equal to 0.12m/s, which indicates that few scatters are moving fast, then the coherence time is around 1s. This coherence time may be chosen arbitrarily or deduced from measurements at the nodes.

In a variant, the delay is computed from the average fade duration of the fading variable, defined as the average time during which a random fading variable is below a given threshold. Indeed, the probability of error of a single carrier modulation transmitted on a wireless link usually increases when the instantaneous SNR $\rho_\square$ decreases. The instantaneous SNR $\rho_i$ is defined by the long term SNR $\rho_i$ times $|\alpha|^2$, where $\alpha$ is an instantaneous fading variable. Thus, each time $\rho_i$ falls below a given threshold $T_h$, the probability of error is higher than a value $P_{target}$. This situation occurs when $|\alpha|^2 < T_h/\rho_l$, with an average duration that can be computed or measured from the distribution of $\tilde{\alpha}$ For example, when $|\alpha|$ has a Rayleigh distribution, the average fade duration is

$$AFD(T_h) = c.\sqrt{\frac{\rho_l}{T_h}}.\frac{e^{\frac{\rho_l}{T_h}}-1}{(vf_c)\sqrt{2\pi}}$$

As a remark, the average fade duration is different from one wireless link to another, and can be computed from measurements of the long term $\rho_l$, transmitted from the nodes to the server device 230, and from the distribution of the fast fading $\alpha$ that can either be chosen arbitrarily or measured and provided by the nodes to the server device 230.

In another variant, the delay to be applied may be adapted according to statistics of preceding duration of transmission issues. In other words, the server device 230, for each node, determines statistics representing, in a sliding time window, a ratio of successful transmissions via or to said node, then compares the determined statistics with a predetermined value, and modifies the delay to be applied according to the result of the comparing. Let's consider the already-mentioned sliding time window. The server device 230 may then determine an average success of transmission to or via each node during the sliding time window. The server device 230 may then analyse the evolution of this average success of transmission over time. When this average success decreases compared to a preceding value, it means that the transmission conditions become less favourable and the server device 230 may decide increasing the delay to be applied; and, when this average success increases compared to a preceding value, it means that the transmission conditions become more favourable and the server device 230 may decide decreasing the delay to be applied. In a variant, when this average success is lower than a threshold value, it means that the transmission conditions are not favourable and the server device 230 may decide increasing the delay to be applied; and, when this average success is equal to or greater than the threshold value, it means that the transmission conditions are favourable and the server device 230 may decide decreasing the delay to be applied.

In yet another variant, the delay to be applied may vary between two attempts for a data collecting phase. For instance, a failure is detected during a data collecting phase concerning a smart meter that is a leaf of the spanning tree, a leaf being a node with no child sub-tree. A delay D1 is then applied to postpone this data collecting phase and, once the delay is elapsed, the data collecting phase is reattempted. If a failure is detected during this reattempt of the data collecting phase, a delay D2 is applied to postpone once again the data collecting phase, wherein D2 > D1.

In yet another variant, the delay to be applied may be identical for all smart meters in a same geographical area. A same delay may then be applied to all smart meters of a given geographical area. This delay may vary over time, as already described, but varies identically for all the smart meters of the given geographical area. The statistics mentioned here above may be determined for the route to a given node and applied to all the routes to nodes in the geographical area of said node. The server device 230 may also determine the statistics, in the sliding window, by computing a ratio of successful transmissions via or to any node of the given geographical area.

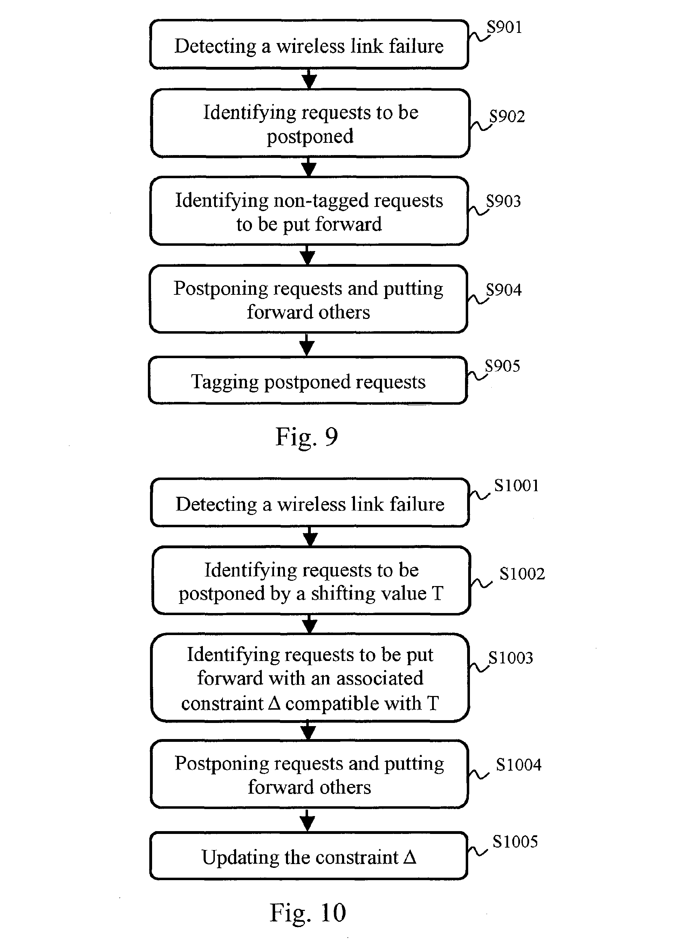

In yet another embodiment, the server device 230 associates with each request an information indicating whether the request may be put forward. The information may further indicate a threshold under which the request is not allowed to be scheduled, and when the server device 230 attempts to put forward one request, the server device 230 first check what request may be put forward and, using the threshold, how much such request is allowed to be put forward. This threshold may be expressed as a relative value compared to the actual schedule timing or index of the request with which it is associated. This embodiment allows avoiding putting forward a request that has already been postponed in a former modifying of the scheduling sequence. This embodiment is further described hereafter with regard to Figs. 9 and 10.

**Fig. 6** schematically represents an algorithm performed by a smart meter 120 of the wireless mesh communications network 100 or 200, or by a concentrator device 110 of the wireless mesh communications network 200. Let's consider in the following that the algorithm is performed by the smart meter 120. The algorithm starts in a step S600.

In a following step S601, the smart meter 120 receives a request from the server device 230. The request may be received directly from the server device 230 or indirectly via the parent node of the smart meter 120.

In a following step S602, the smart meter 120 checks whether the request is correctly received. For instance, the smart meter 120 checks the consistency of the request with a CRC (*Cyclic Redundancy Check*) field contained in the request. If the request is correctly received, the smart meter 120 performs a step S605; otherwise, the smart meter 120 performs a step S603.

In the step S603, the smart meter 120 transmits a wireless link failure message (WLFM) to the server device 230 via its parent node in the spanning tree. The transmitted WLFM indicates that the request has not been correctly received by the smart meter 120. It therefore identifies the wireless link on which the transmission failure has been detected. Then the algorithm ends in a step S615.

It has to be noted that the WLFM messages are signalling messages between the server device 230 and the nodes of the wireless mesh communications network, and are distinct from the ACK/NACK that might be transmitted between two neighbouring nodes at the MAC layer, as already described.

In the step S605, the smart meter 120 checks whether the received request is addressed to itself or to a smart meter that is located in its child sub-tree. The smart meter 120 obtains this information from an identifier of the smart meter, or smart meters, to which the request is addressed, contained in the request transmitted by the server device 230 in the step S504. The smart meter 120 being aware of the spanning tree, or at least to the spanning tree portion including itself, its parent node and its child sub-tree, is able to identify whether the request is addressed to itself or to another smart meter, and whether this other smart meter is located in its child sub-tree. When the received request is addressed to itself, the smart meter 120 performs a step S606; otherwise, the smart meter 120 performs a step S607.

In the step S606, the smart meter 120 retrieves the data requested by the server device 230, builds a response comprising the retrieved data and transmits the response to its parent node. Then the algorithm ends in the step S615.

In the step S607, the smart meter 120 determines the number of hops to reach the addressed smart meter. The smart meter 120 being aware of the spanning tree, and therefore the location of each node in the spanning tree, the smart meter 120 is able to determine said number of hops.

In a following step S608, the smart meter 120 sets a timeout. This timeout is associated with the request received in the step S601. The duration of this timeout is computed at least according to the number of hops determined in the step S607. The smart meter 120 may take into account, to compute the duration of the timeout: the maximum transmission time period from one node to a neighbouring node, the maximum number of allowed retransmissions from one node to a neighbouring node and the maximum allowed message processing time period in a node.

In a preferred embodiment, the smart meter 120 obtains the timeout duration by multiplying the determined number of hops by the already-mentioned per-hop reference time period value. The per-hop reference time period value may be provided by the server device 230 or may be deduced by the smart meter 120 itself based on long term statistics of transmissions with its neighbouring nodes.

In a following step S609, the smart meter 120 forwards the received request toward the addressee, *i.e.* the smart meter identified in the request by the server device 230 in the step S504. The smart meter 120 therefore forwards the received request to the next smart meter en route toward the addressee according to the spanning tree, which might be the addressee itself.

In a following step S610, the smart meter 120 waits for detecting an event, which can be receiving of an indication (MAC_ERR) from the MAC layer that the transmission performed in the step S609 failed, receiving of a WLFM, receiving of a response (RESP) to the request from the addressee or expiring of the timeout (TO) set in the step S608.

When the layer of the smart meter 120 by which the algorithm of Fig. 6 is implemented receives, from the MAC layer of the smart meter 120, a notification (MAC_ERR) indicating that the request attempted to be relayed generated in response at least one non-acknowledgement, a step S613 is performed.

A WLFM is received by the smart meter 120 when the request forwarded in the step S609 is not correctly received by one smart meter en route from the smart meter 120 to the addressee of the request, or when the response to the request is not correctly received by one smart meter en route from the addressee of the request to the smart meter 120, or when no response nor WLFM has been received by one smart meter en route from the addressee of the request to the smart meter 120 within a predetermined time period. When a WLFM is received, the smart meter 120 performs a step S612.

The timeout set in the step S608 expires when no RESP nor WLFM is received from, or via, the next smart meter en route toward the addressee of the request forwarded in the step S609. When the timeout expires, it means that a transmission failure is detected on the wireless link via which the request has been relayed, or in the child sub-tree of this wireless link. The timeout set in the step S608 is preferably adapted to enable the reception of such a WLFM from any node of the child sub-tree on the route toward the addressee before expiry of the timeout, in order to increase the accuracy in the identification of the wireless link on which the transmission failure occurred. The smart meter 120 consequently performs the step S613.

When the response (RESP) to the request is received from the addressee, the smart meter 120 performs a step S614.

In the step S612, the smart meter 120 forwards the received WLFM toward the server device 230 via its parent node, and the algorithm ends in the step S615.

In the step S613, the smart meter 120 generates and transmits a WLFM towards the server device 230 via its parent node and the algorithm ends in the step S615.

The WLFM generated by the smart meter 120 is representative of a transmission failure that occurred, in the spanning tree portion corresponding to the child sub-tree of the smart meter 120, during a transmission of one request or a response to said request. The WLFM then comprises an indication of a wireless link via which said request has been attempted to be relayed by the smart meter 120. The routes of the spanning tree impacted by the detected link failure are the routes including any node of the child sub-tree of the identified wireless link.

The WLFM therefore identifies the wireless link on which a transmission failure has been detected, whereas it may have occurred on another wireless link of the child sub-tree of the identified wireless link.

Once the smart meter 120 has transmitted the WLFM toward the server device 230, the algorithm ends in the step S615.

In a preferred embodiment, the WLFM generated or forwarded by the smart meter 120 also comprises the data that shall be gathered by the server device 230 and that shall be provided by the smart meter 120, if not yet provided by the smart meter 120 to the server device 230. This allows limiting protocol overhead compared to waiting for receiving a request specifically addressed to the smart meter 120 by the server device 230 and reduces the overall latency for collecting the data by the server device 230.

In the step S614, the smart meter 120 forwards the response (RESP) toward the server device 230. The timeout set in the step S608 is consequently cancelled. Then the algorithm ends in the step S615.

**Fig. 9** schematically represents an algorithm performed by the data gathering device for modifying scheduling sequences. The data gathering device is the server device 230 in the scope of the communications network 200 and the concentrator device 110 in the scope of the communications network 100. Let's consider in the following that the data gathering device is the server device 230.

In a step S901, the server device 230 detects a wireless link failure, or a transmission issue, as already described hereinbefore with regard to Fig. 5.

In a following step S902, the server device 230 identifies the requests to be postponed in the scheduling sequence. These requests correspond to the routes impacted by the wireless link failure, or the transmission issue, detected in the step S901. The server device 230 further determines how many requests need to be postponed. Let's denote N the number of requests to be postponed. The server device 230 also obtains the shifting value T to be applied to the first request in sequence to be postponed.

In a following step S903, the server device 230 identifies the non-tagged requests in the scheduling sequence to be put forward. A tag is used to indicate whether a request is allowed to be put forward. When the tag associated with a request indicates that the request is not allowed to be put forward, the server device 230 ensures in the modified scheduling sequence that the index of this request in not lower than its index prior to the modification of the scheduling sequence, or that the instant at which the transmission of the request is scheduled in the modified scheduling sequence is not sooner than the instant at which the transmission of the request was scheduled prior to the modification of the scheduling sequence.

The server device 230 needs optimally to find at least N requests allowed to be put forward within the time frame defined by the shifting value T.

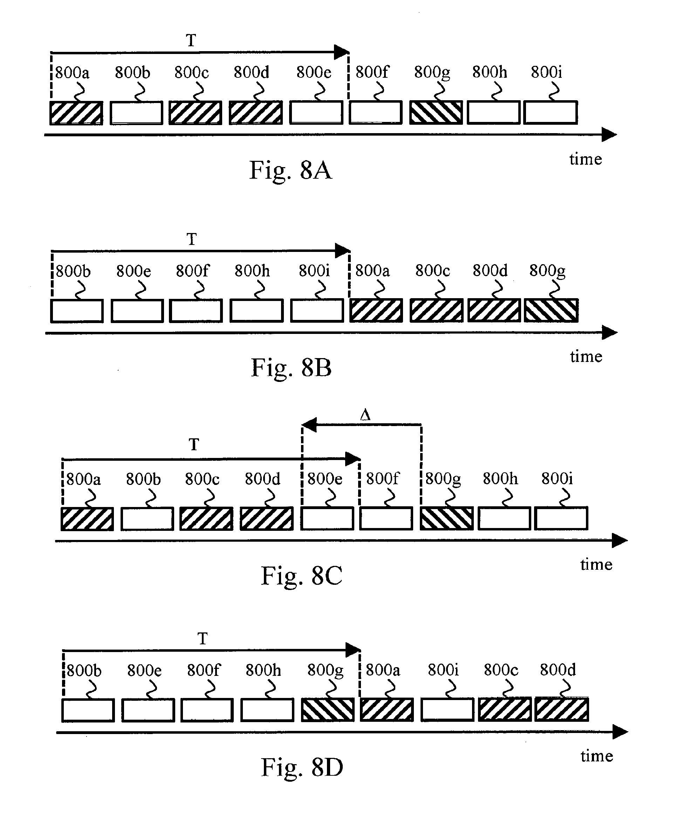

Let's for instance consider the scheduling sequence schematically represented in Fig. 8A. **Fig. 8A** schematically represents a scheduling sequence comprising nine successive data collecting phases 800k, wherein k=a,b,...,i. A wireless link failure is detected during the data collecting phase 800a, and the data collecting phases 800a, 800c and 800d need to be postponed. The shifting value T leads to an increase of index at least equal to five units for the data collecting phase 800a. It is considered that the data collecting phases 800c and 800d shall be rescheduled after the data collecting phase 800a to maintain their relative order. The data collecting phase 800g is considered as being tagged as not allowed to be put forward, whereas the data collecting phases 800b, 800e, 800f, 800h, 800i are not tagged as not allowed to be put forward. The modifying of the scheduling sequence may result in the scheduling sequence schematically represented in Fig. 8B. **Fig. 8B** schematically represents a modified scheduling sequence in which the data collecting phase 800b is followed by the data collecting phase 800e, then followed by the data collecting phase 800f, then followed by the data collecting phase 800h, then followed by the data collecting phase 800i, then followed by the data collecting phase 800a, then followed by the data collecting phase 800c, then followed by the data collecting phase 800d, and then followed by the data collecting phase 800g. Therefore the data collecting phase 800g has not been put forward to compensate the postponing of the data collecting phases 800a, 800c and 800d.

Back To Fig. 9, in a following step S904, the server device 230 modifies the scheduling sequence by postponing the requests identified in the step S901 and by putting forward requests identified in the step S903.

In a following step S905, the server device 230 tags the requests that have been postponed as requests not allowed to be put forward. It results, referring to Fig.

8B, in having data collecting phases 800a, 800b, 800c and 800d tagged as not allowed to be put forward.

**Fig. 10** schematically represents another algorithm performed by the data gathering device for modifying scheduling sequences. The data gathering device is the server device 230 in the scope of the communications network 200 and the concentrator device 110 in the scope of the communications network 100. Let's consider in the following that the data gathering device is the server device 230.

In a step S1001, the server device 230 detects a wireless link failure, or a transmission issue, as already described hereinbefore with regard to Fig. 5.

In a following step S1002, the server device 230 identifies the requests to be postponed in the scheduling sequence. These requests correspond to the routes impacted by the wireless link failure, or the transmission issue, detected in the step S1001. The server device 230 further determines how many requests need to be postponed. Let's denote N the number of requests to be postponed. The server device 230 also obtains the shifting value T to be applied to the any request in sequence to be postponed.

In a following step S1003, the server device 230 identifies the requests in the scheduling sequence that have an associated constraint Δ compatible with the shifting value T and that are not identified in the step S1002. This constraint Δ is used to indicate the width of index decrease that can be applied to the associated request. When the constraint Δ associated with a request indicates that the request is only allowed to be put forward by a decrease of index equal to *n,* the server device 230 ensures in the modified scheduling sequence that the index of this request in not lower than its index prior to the modification of the scheduling sequence minus *n.*

The same principle may be applied with time reference instead of index reference. The server device 230 needs optimally to find at least N requests allowed to be put forward within the time frame defined by the shifting value T.

Let's for instance consider the scheduling sequence schematically represented in Fig. 8C. **Fig. 8C** schematically represents a scheduling sequence comprising nine successive data collecting phases 800k, wherein k=a,b,...,i, identically to the scheduling sequence of Fig. 8A. A wireless link failure is detected during the data collecting phase 800a, and the data collecting phases 800a, 800c and 800d need to be postponed. The shifting value T leads to an increase of index at least equal to five units for the data collecting phases 800a, 800c and 800d. The data collecting phase 800g is considered as being associated with a constraint Δ equal to two, whereas the data collecting phases 800b, 800e, 800f, 800h, 800i have no constraint Δ or a constraint Δ representative of an infinite value. The modifying of the scheduling sequence may result in the scheduling sequence schematically represented in Fig. 8D. **Fig. 8D** schematically represents a modified scheduling sequence in which the data collecting phase 800b is followed by the data collecting phase 800e, then followed by the data collecting phase 800f, then followed by the data collecting phase 800h, then followed by the data collecting phase 800g, then followed by the data collecting phase 800a, then followed by the data collecting phase 800i, then followed by the data collecting phase 800c, and then followed by the data collecting phase 800d. Therefore the data collecting phase 800g has not been put forward by more than two units to compensate the postponing of the data collecting phases 800a, 800c and 800d.

Back to Fig. 10, in a following step S1004, the server device 230 modifies the scheduling sequence by postponing the requests identified in the step S1001 and by putting forward requests identified in the step S1003.

In a following step S1005, the server device 230 modifies the constraint $\Delta$ for each request for which the index, or the instant at which the request is scheduled for transmission, has changed. It results, referring to Fig. 8D, in setting the constraint $\Delta$ to zero for the data collecting phases 800g, 80a, 800c and 800d. The constraint $\Delta$ may be set to two for the data collecting phase 800c and to three for the data collecting phase 800d, if the relative difference of index or timing of the postponed data collecting phases doesn't necessarily need to be maintained.

**Claims**

1. A method for reducing a time period needed by a data gathering device (110; 230) to collect data from nodes (120) of a wireless mesh communications network (100; 200), communications between said data gathering device and said nodes being performed according to a spanning tree in the wireless mesh communications network, said data gathering device performs:

   - transmitting (S504) requests to said nodes in a first scheduling sequence for collecting said data, each request being addressed to at least one said node ;
   - detecting (S506) a link failure on one wireless link of the spanning tree;
   - determining (S508) at least one route of the spanning tree comprising said wireless link on which the link failure has been detected;
   - modifying (S509) the first scheduling sequence to obtain a second scheduling sequence, by postponing at least one request addressed to at least one respective node present on the at least one determined route comprising said wireless link on which the link failure has been detected, and by putting forward at least one request addressed to at least one respective node present on at least one route distinct from said at least one determined route comprising said wireless link on which the link failure has been detected; and
   - continuing transmitting (S504) requests to said nodes according to the second scheduling sequence.

2. The method according to claim 1, **characterized in that** modifying the first scheduling sequence comprises scheduling all the requests addressed to nodes corresponding to the at least one determined route comprising said wireless link on which the link failure has been detected after all the other requests.

3. The method according to claim 1, **characterized in that** modifying the first scheduling sequence comprises postponing by a shifting value each request addressed to a node corresponding to one of the at least one determined route comprising said wireless link on which the link failure has been detected.

4. The method according to claim 3, **characterized in that** modifying the first scheduling sequence comprises postponing by a common shifting value each request addressed to at least one respective node corresponding to the at least one determined route comprising said wireless link on which the link failure has been detected.

5. The method according to any one of claims 3 and 4, **characterized in that** the shifting value is expressed as an index shift when each request in a considered scheduling sequence is indexed, or the shifting value is expressed as a time delay when each request in a considered scheduling sequence is associated with an instant at which said request is scheduled for transmission by the data gathering device.

6. The method according to claim 5, **characterized in that** the data gathering device performs:

   - applying a time delay to each request addressed to a node corresponding to one of the at least one determined route comprising said wireless link on which the link failure has been detected;
   - determining which request among the other requests may be scheduled before expiring of the time delay; and
   - scheduling said determined request in the scheduling sequence before each request addressed to a node corresponding to one of the at least one determined route comprising said wireless link on which the link failure has been detected.

7. The method according to any one of claims 3 to 6, **characterized in that** the data gathering device performs:

- associating with each request an information indicating whether the request may be put forward;
- updating (S905) said information for each request addressed to a node corresponding to one of the at least one determined route comprising said wireless link on which the link failure has been detected; and
- determining, when modifying the first scheduling sequence, which request is allowed for being put forward on the basis of said information.

8. The method according to any one of claims 3 to 6, **characterized in that** the data gathering device performs:

- associating with each request a constraint indicating whether the request may be put forward and, if the request may be put forward, by how many units said request may be put forward ;
- determining, when modifying the first scheduling sequence, which request is allowed for being put forward on the basis of said constraint; and
- updating said constraint for each request that has been postponed or put forward in the modifying of the first scheduling sequence to obtain the second scheduling sequence.

9. The method according to any one of claims 3 to 8, **characterized in that** the data gathering device performs, for each node :

- determining statistics representing, in a sliding time window, a ratio of successful transmissions via or to said node;
- comparing the determined statistics with a predetermined value; and
- modifying the shifting value according to the result of the comparing.

10. The method according to any one of claims 1 to 9, **characterized in that** said data gathering device performs:

- receiving a wireless link failure report generated by one node, said report comprising an indication of a wireless link via which said request has been attempted to be relayed by said node having generated the report, and said report being representative of a transmission failure that occurred, on said wireless link indicated in the report or in the spanning tree portion corresponding to the child sub-tree of said wireless link indicated in the report, during a transmission of one of said requests or a response to one of said requests;
and **in that** said routes are determined to be the routes including any node of said child sub-tree.

11. The method according to claim 10, **characterized in that** said wireless link failure report is generated (S613) by a node when a layer of said node receives, from the medium access control layer of said node, a notification indicating that said request attempted to be relayed generating in response at least one non-acknowledgement.

12. The method according to any one of claims 10 and 11, **characterized in that** said wireless link failure report is generated (S613) by a node when a timeout expires without said node receiving a response nor another wireless link failure report, from a node to which one of said request is addressed, to said request with which the timeout is associated.

13. The method according to claim 12, **characterized in that** said timeout is set (S608) up by at least taking into account the number of hops in the spanning tree, between the node setting up said timeout and the node to which the request associated with said timeout is addressed.

14. The method according to any one of claims 10 to 13, **characterized in that** the node generating the wireless link failure report performs:

- checking whether said node generating the wireless link failure report already responded to one of said requests,
- including in the wireless link failure report its own data to be collected by said device, when said node generating the wireless link failure report did not already respond to one of said requests.

15. A device (110; 230) for reducing a time period needed by said device to collect data from nodes (120) of a wireless mesh communications network (100; 200), communications between said device and said nodes being performed according to a spanning tree in the wireless mesh communications network, said device comprises:

- means for transmitting (S504) requests to said nodes in a first scheduling sequence for collecting said data, each request being addressed to at least one said node ;
- means for detecting (S506) a link failure on one wireless link of the spanning tree;
- means for determining (S508) at least one route of the spanning tree comprising said wireless link on which the link failure has been detected;
- means for modifying (S509) the first scheduling sequence to obtain a second scheduling sequence, by postponing at least one request addressed to at least one respective node present on the at least one determined route comprising said wireless link on which the link failure has been detected, and by putting forward at least one request addressed to at least one respective node present on at least one route distinct from said at least one determined route comprising said wireless link on which the link failure has been detected; and

- means for continuing transmitting (S504) requests to said nodes according to the second scheduling sequence.

**Patentansprüche**

1. Verfahren zum Reduzieren einer Zeitperiode, die von einer Datensammelvorrichtung (110; 230) benötigt wird, Daten von Knoten (120) eines drahtlosen Maschenkommunikationsnetzwerks (100; 200) zu sammeln, wobei Kommunikationen zwischen der Datensammelvorrichtung und den Knoten gemäß einem Überbrückungsbaum in dem drahtlosen Maschenkommunikationsnetzwerk durchgeführt werden, wobei die Datensammelvorrichtung folgendes durchführt:

   - Senden (S504) von Anfragen zu den Knoten in einer ersten Zeitplanungssequenz zum Sammeln der Daten, wobei jede Anfrage zu wenigstens einem der Knoten adressiert ist;
   - Detektieren (S506) eines Verbindungsfehlers auf einer drahtlosen Verbindung des Überbrückungsbaums;
   - Bestimmen (S508) wenigstens eines Wegs des Überbrückungsbaums, der die drahtlose Verbindung aufweist, auf welcher der Verbindungsfehler detektiert worden ist;
   - Modifizieren (S509) der ersten Zeitplanungssequenz, um eine zweite Zeitplanungssequenz zu erhalten, durch Hinausschieben wenigstens einer Anfrage, die zu wenigstens einem jeweiligen Knoten adressiert ist, der auf dem wenigstens einen bestimmten Weg vorhanden ist, der die drahtlose Verbindung aufweist, auf welcher der Verbindungsfehler detektiert worden ist, und durch Schieben wenigstens einer Anfrage nach vorn, die zu wenigstens einem jeweiligen Knoten adressiert ist, der auf wenigstens einem Weg vorhanden ist, der unterschiedlich von dem wenigstens einen bestimmten Weg ist, der die drahtlose Verbindung aufweist, auf welcher der Verbindungsfehler detektiert worden ist; und
   - Fortsetzen eines Sendens (S504) von Anfragen zu den Knoten gemäß der zweiten Zeitplanungssequenz.

2. Verfahren nach Anspruch 1, **dadurch gekennzeichnet, dass** ein Modifizieren der ersten Zeitplanungssequenz ein zeitliches Planen all der Anfragen, die zu Knoten entsprechend dem wenigstens einen bestimmten Weg adressiert sind, der die drahtlose Verbindung aufweist, auf welcher der Verbindungsfehler detektiert worden ist, nach all den anderen Anfragen aufweist.

3. Verfahren nach Anspruch 1, **dadurch gekennzeichnet, dass** ein Modifizieren der ersten Zeitplanungssequenz ein Hinausschieben um einen Verschiebungswert von jeder Anfrage, die zu einem Knoten entsprechend einem des wenigstens einen bestimmten Wegs adressiert ist, der die drahtlose Verbindung aufweist, auf welcher der Verbindungsfehler detektiert worden ist, aufweist.

4. Verfahren nach Anspruch 3, **dadurch gekennzeichnet, dass** ein Modifizieren der ersten Zeitplanungssequenz ein Hinausschieben um einen allgemeinen Verschiebungswert von jeder Anfrage, die zu wenigstens einem jeweiligen Knoten entsprechend dem wenigstens einen bestimmten Wegs adressiert ist, der die drahtlose Verbindung aufweist, auf welcher der Verbindungsfehler detektiert worden ist, aufweist.

5. Verfahren nach einem der Ansprüche 3 und 4, **dadurch gekennzeichnet, dass** der Verschiebungswert als eine Indexverschiebung ausgedrückt wird, wenn jede Anfrage in einer berücksichtigten Zeitplanungssequenz indiziert ist, oder der Verschiebungswert als eine Zeitverzögerung ausgedrückt wird, wenn jede Anfrage in einer berücksichtigten Zeitplanungssequenz mit einem Moment verbunden ist, zu welchem die Anfrage zur Sendung durch die Datensammelvorrichtung zeitlich geplant ist.

6. Verfahren nach Anspruch 5, **dadurch gekennzeichnet, dass** die Datensammelvorrichtung folgendes durchführt:

   - Anwenden einer Zeitverzögerung auf jede Anfrage, die zu einem Knoten entsprechend einem des wenigstens einen bestimmten Wegs adressiert ist, der die drahtlose Verbindung aufweist, auf welcher der Verbindungsfehler detektiert worden ist;
   - Bestimmen, welche Anfrage unter den anderen Anfragen vor ein Ablaufen der Zeitverzögerung zeitlich geplant werden kann; und
   - zeitliches Planen der bestimmten Anfrage in der Zeitplanungssequenz vor jeder Anfrage, die zu einem Knoten entsprechend einem des wenigstens einen bestimmten Wegs adressiert ist, der die drahtlose Verbindung aufweist, auf welcher der Verbindungsfehler detektiert worden ist.

**7.** Verfahren nach einem der Ansprüche 3 bis 6, **dadurch gekennzeichnet, dass** die Datensammelvorrichtung folgendes durchführt:

- Verbinden einer Information, die anzeigt, ob die Anfrage nach vorn geschoben werden kann, mit jeder Anfrage;
- Updaten (S905) der Information für jede Anfrage, die zu einem Knoten entsprechend einem des wenigstens einen bestimmten Wegs adressiert ist, der die drahtlose Verbindung aufweist, auf welcher der Verbindungsfehler detektiert worden ist; und
- wenn die erste Zeitplanungssequenz modifiziert wird, Bestimmen, für welche Anfrage es zugelassen wird, dass sie nach vorn geschoben wird, auf der Basis der Information.

**8.** Verfahren nach einem der Ansprüche 3 bis 6, **dadurch gekennzeichnet, dass** die Datensammelvorrichtung folgendes durchführt:

- Verbinden einer Beschränkung, die anzeigt, ob die Anfrage nach vorn geschoben werden kann, und, wenn die Anfrage nach vorn geschoben werden kann, um wie viele Einheiten die Anfrage nach vorn geschoben werden kann, mit jeder Anfrage;
- wenn die erste Zeitplanungssequenz modifiziert wird, Bestimmen, für welche Anfrage es zugelassen ist, nach vorn geschoben zu werden, auf der Basis der Beschränkung; und
- Updaten der Beschränkung für jede Anfrage, die hinausgeschoben oder nach vorn geschoben worden ist, beim Modifizieren der ersten Zeitplanungssequenz, um die zweite Zeitplanungssequenz zu erhalten.

**9.** Verfahren nach einem der Ansprüche 3 bis 8, **dadurch gekennzeichnet, dass** die Datensammelvorrichtung für jeden Knoten folgendes durchführt:

- Bestimmen von Statistiken, die in einem gleitenden Zeitfenster ein Verhältnis von erfolgreichen Sendungen über den oder zu dem Knoten darstellen;
- Vergleichen der bestimmten Statistiken mit einem vorbestimmten Wert; und
- Modifizieren des Verschiebungswerts gemäß dem Ergebnis des Vergleichens.

**10.** Verfahren nach einem der Ansprüche 1 bis 9, **dadurch gekennzeichnet, dass** die Datensammelvorrichtung folgendes durchführt:

- Empfangen eines durch einen Knoten erzeugten Fehlerberichts der drahtlosen Verbindung, wobei der Bericht eine Anzeige einer drahtlosen Verbindung aufweist, über welche versucht worden ist, dass die Anfrage durch den Knoten, der den Bericht erzeugt hat, weitergeleitet wird, und wobei der Bericht einen Sendefehler darstellt, der auf der in dem Bericht angezeigten drahtlosen Verbindung oder in dem Überbrückungsbaumteilabschnitt entsprechend dem Kind-Teilbaum der in dem Bericht angezeigten drahtlosen Verbindung während einer Sendung von einer der Anfragen oder einer Antwort auf eine der Anfragen auftrat;
- und dass die Wege derart bestimmt werden, dass sie Wege sind, die irgendeinen Knoten des Kind-Teilbaums enthalten.

**11.** Verfahren nach Anspruch 10, **dadurch gekennzeichnet, dass** der Fehlerbericht der drahtlosen Verbindung durch einen Knoten erzeugt wird (S613), wenn eine Schicht des Knotens von der Mediumzugriffssteuerschicht des Knotens eine Benachrichtigung empfängt, die anzeigt, dass die Anfrage, für die versucht worden ist, weitergeleitet zu werden, in Reaktion wenigstens eine Nicht-Bestätigung erzeugt.

**12.** Verfahren nach einem der Ansprüche 10 und 11, **dadurch gekennzeichnet, dass** der Fehlerbericht der drahtlosen Verbindung durch einen Knoten erzeugt wird (S613), wenn eine Auszeit abläuft, ohne dass der Knoten eine Antwort oder auch keinen anderen Fehlerbericht der drahtlosen Verbindung von einem Knoten, zu welchem eine der Anfragen adressiert ist, auf die Anfrage, mit welcher die Auszeit verbunden ist, empfängt.

**13.** Verfahren nach Anspruch 12, **dadurch gekennzeichnet, dass** die Auszeit durch wenigstens ein Berücksichtigen der Anzahl von Sprüngen in dem Überbrückungsbaum zwischen dem Knoten, der die Auszeit einstellt, und dem Knoten, zu welchem die mit der Auszeit verbundene Anfrage adressiert ist, eingestellt wird (S608).

**14.** Verfahren nach einem der Ansprüche 10 bis 13, **dadurch gekennzeichnet, dass** der Knoten, der den Fehlerbericht der drahtlosen Verbindung erzeugt, folgendes durchführt:

- Prüfen, ob der Knoten, der den Fehlerbericht der drahtlosen Verbindung erzeugt, bereits auf eine der Anfragen geantwortet hat,
- Einschließen seiner eigenen, durch die Vorrichtung zu sammelnden Daten in den Fehlerbericht der drahtlosen Verbindung, wenn der Knoten, der den Fehlerbericht der drahtlosen Verbindung erzeugt, nicht bereits auf eine der Anfragen geantwortet hat.

**15.** Vorrichtung (110; 230) zum Reduzieren einer Zeitperiode, die von der Vorrichtung benötigt wird, Daten von Knoten (120) eines drahtlosen Maschenkommunikationsnetzwerks (100; 200) zu sammeln, wobei Kommunikationen zwischen der Vorrichtung und den Knoten gemäß einem Überbrückungsbaum in dem drahtlosen Maschenkommunikationsnetzwerk durchgeführt werden, wobei die Vorrichtung folgendes aufweist:

- Mittel zum Senden (S504) von Anfragen zu den Knoten in einer ersten Zeitplanungssequenz zum Sammeln der Daten, wobei jede Anfrage zu wenigstens einem der Knoten adressiert ist;
- Mittel zum Detektieren (S506) eines Verbindungsfehlers auf einer drahtlosen Verbindung des Überbrückungsbaums;
- Mittel zum Bestimmen (S508) wenigstens eines Wegs des Überbrückungsbaums, der die drahtlose Verbindung aufweist, auf welcher der Verbindungsfehler detektiert worden ist;
- Mittel zum Modifizieren (S509) der ersten Zeitplanungssequenz, um eine zweite Zeitplanungssequenz zu erhalten, durch Hinausschieben wenigstens einer Anfrage, die zu wenigstens einem jeweiligen Knoten adressiert ist, der auf dem wenigstens einen bestimmten Weg vorhanden ist, der die drahtlose Verbindung aufweist, auf welcher der Verbindungsfehler detektiert worden ist, und durch Schieben wenigstens einer Anfrage nach vorn, die zu wenigstens einem jeweiligen Knoten adressiert ist, der auf wenigstens einem Weg vorhanden ist, der unterschiedlich von dem wenigstens einen bestimmten Weg ist, der die drahtlose Verbindung aufweist, auf welcher der Verbindungsfehler detektiert worden ist; und
- Mittel zum Fortsetzen eines Sendens (S504) von Anfragen zu den Knoten gemäß der zweiten Zeitplanungssequenz.

**Revendications**

**1.** Procédé pour réduire une période de temps dont a besoin un dispositif de regroupement de données (110 ; 230) pour collecter des données auprès de noeuds (120) d'un réseau maillé de communication sans-fil (100 ; 200), des communications entre ledit dispositif de regroupement de données et lesdits noeuds étant effectuées selon un arbre de recouvrement dans le réseau maillé de communication sans-fil, ledit dispositif de regroupement de données effectue :

- transmettre (S504) des requêtes auxdits noeuds selon une première séquence de planification pour collecter lesdites données, chaque requête étant adressée à au moins un dit noeud ;
- détecter (S506) un défaut de lien sur un lien sans-fil de l'arbre de recouvrement ;
- déterminer (S508) au moins une route de l'arbre de recouvrement comprenant ledit lien sans-fil sur lequel le défaut de lien a été détecté ;
- modifier (S509) la première séquence de planification pour obtenir une seconde séquence de planification, en retardant au moins une requête adressée à au moins un noeud respectif présent sur ladite au moins une route déterminée comprenant ledit lien sans-fil sur lequel le défaut de lien a été détecté, et en avançant au moins une requête adressée à au moins un noeud respectif présent sur au moins une route distincte de ladite au moins une route déterminée comprenant ledit lien sans-fil sur lequel le défaut de lien a été détecté ; et
- continuer de transmettre (S504) des requêtes auxdits noeuds selon la seconde séquence de planification.

**2.** Procédé selon la revendication 1, **caractérisé en ce que** modifier la première séquence de planification comprend planifier toutes les requêtes adressées à des noeuds correspondant à la au moins une route déterminée comprenant ledit lien sans-fil sur lequel le défaut de lien a été détecté après toutes les autres requêtes.

**3.** Procédé selon la revendication 1, **caractérisé en ce que** modifier la première séquence de planification comprend retarder par une valeur de décalage chaque requête adressée à un noeud correspondant à une dite route déterminée comprenant ledit lien sans-fil sur lequel le défaut de lien a été détecté.

**4.** Procédé selon la revendication 3, **caractérisé en ce que** modifier la première séquence de planification comprend retarder par une valeur de décalage commune chaque requête adressée à un noeud respectif correspondant à ladite au moins une route déterminée comprenant ledit lien sans-fil sur lequel le défaut de lien a été détecté.

**5.** Procédé selon l'une quelconque des revendications 3 et 4, **caractérisé en ce que** la valeur de décalage est exprimée comme un décalage d'index lorsque chaque requête dans une séquence de planification considérée est indexée, ou la valeur de décalage est exprimée comme un délai temporel lorsque chaque requête dans une séquence de planification considérée est associée avec un instant auquel ladite requête est planifiée pour transmission par le dispositif de regroupement de données.

**6.** Procédé selon la revendication 5, **caractérisé en ce que** le dispositif de regroupement de données effectue :

- appliquer un délai temporel à chaque requête adressée à un noeud correspondant à une dite route déterminée comprenant ledit lien sans-fil sur lequel le défaut de lien a été détecté ;
- déterminer quelle requête parmi les autres requêtes peut être planifiée avant expiration du délai temporel ; et
- planifier ladite requête déterminée dans la séquence de planification avant chaque requête adressée à un noeud correspondant à une dite route déterminée comprenant ledit lien sans-fil sur lequel le défaut de lien a été détecté.

**7.** Procédé selon l'une quelconque des revendications 3 à 6, **caractérisé en ce que** le dispositif de regroupement de données effectue :

- associer à chaque requête une information indiquant si la requête peut être avancée ;
- mettre à jour (S905) ladite information pour chaque requête adressée à un noeud correspondant à une dite route déterminée comprenant ledit lien sans-fil sur lequel le défaut de lien a été détecté ; et
- déterminer, en modifiant la première séquence de planification, quelle requête peut être avancée sur la base de ladite information.

**8.** Procédé selon l'une quelconque des revendications 3 à 6, **caractérisé en ce que** le dispositif de regroupement de données effectue :

- associer à chaque requête une contrainte indiquant si la requête peut être avancée et, si la requête peut être avancée, de combien d'unités ladite requête peut être avancée ;
- déterminer, en modifiant la première séquence de planification, quelle requête peut être avancée sur la base de ladite contrainte ; et
- mettre à jour ladite contrainte pour chaque requête qui a été retardée ou avancée dans la modification de la première séquence de planification pour obtenir la seconde séquence de planification.

**9.** Procédé selon l'une quelconque des revendications 3 à 8, **caractérisé en ce que** le dispositif de regroupement de données effectue, pour chaque noeud :

- déterminer des statistiques représentant, dans une fenêtre glissante, un taux de transmissions avec succès via ou à destination dudit noeud ;
- comparer les statistiques déterminées avec une valeur prédéterminée ; et

- modifier la valeur de décalage d'après le résultat de la comparaison.

**10.** Procédé selon l'une quelconque des revendications 1 à 9, **caractérisé en ce que** le dispositif de regroupement de données effectue :

- recevoir un rapport de défaut de lien sans-fil généré par un noeud, ledit rapport comprenant une indication de lien sans-fil via lequel ladite requête a été tentée d'être relayée par ledit noeud ayant généré ledit rapport, et ledit rapport étant représentatif d'un échec de transmission qui est survenu, sur ledit lien sans-fil indiqué dans le rapport ou dans la portion d'arbre de recouvrement correspondant au sous-arbre enfant dudit lien sans-fil indiqué dans le rapport, pendant la transmission d'une desdites requêtes ou d'une réponse à une desdites requêtes ; et **en ce que** lesdites routes sont déterminées comme étant les routes incluant tout noeud dudit sous-arbre enfant.

**11.** Procédé selon la revendication 10, **caractérisé en ce que** ledit rapport de défaut de lien sans-fil est généré (S613) par un noeud lorsqu'une couche dudit noeud reçoit, en provenance de la couche de contrôle d'accès au medium dudit noeud, une notification indiquant que ladite requête tentée d'âtre relayée générant en réponse au moins un non-acquittement.

**12.** Procédé selon l'une quelconque des revendications 10 et 11, **caractérisé en ce que** ledit rapport de défaut de lien sans-fil est généré (S613) par un noeud lorsqu'une temporisation expire sans que ledit noeud ne reçoive de réponse ni d'autre rapport de défaut de lien sans-fil, en provenance d'un noeud auquel ladite requête est adressée, à la requête avec laquelle la temporisation est associée.

**13.** Procédé selon la revendication 12, **caractérisé en ce que** ladite temporisation est paramétrée en prenant au moins en compte le nombre de sauts dans l'arbre de recouvrement, entre le noeud paramétrant ladite temporisation et le noeud auquel la requête associée avec ladite temporisation est adressée.

**14.** Procédé selon l'une quelconque des revendications 10 à 13, **caractérisé en ce que** le noeud générant le rapport de défaut de lien sans-fil effectue :

- vérifier si ledit noeud générant le rapport de défaut de lien sans-fil a déjà répondu à une desdites requêtes,
- inclure dans le rapport de défaut de lien sans-fil ses propres données devant être collectées par ledit dispositif, lorsque ledit noeud générant le rapport de défaut de lien sans-fil n'a pas déjà répondu à une desdites requêtes.

15. Dispositif (110 ; 230) pour réduire une période de temps dont a besoin ledit dispositif pour collecter des données auprès de noeuds (120) d'un réseau maillé de communication sans-fil (100 ; 200), des communications entre ledit dispositif et lesdits noeuds étant effectuées selon un arbre de recouvrement dans le réseau maillé de communication sans-fil, ledit dispositif comprend :

   - des moyens pour transmettre (S504) des requêtes auxdits noeuds selon une première séquence de planification pour collecter lesdites données, chaque requête étant adressée à au moins un dit noeud ;
   - des moyens pour détecter (S506) un défaut de lien sur un lien sans-fil de l'arbre de recouvrement ;
   - des moyens pour déterminer (S508) au moins une route de l'arbre de recouvrement comprenant ledit lien sans-fil sur lequel le défaut de lien a été détecté ;
   - des moyens pour modifier (S509) la première séquence de planification pour obtenir une seconde séquence de planification, en retardant au moins une requête adressée à au moins un noeud respectif présent sur ladite au moins une route déterminée comprenant ledit lien sans-fil sur lequel le défaut de lien a été détecté, et en avançant au moins une requête adressée à au moins un noeud respectif présent sur au moins une route distincte de ladite au moins une route déterminée comprenant ledit lien sans-fil sur lequel le défaut de lien a été détecté ; et
   - des moyens pour continuer de transmettre (S504) des requêtes auxdits noeuds selon la seconde séquence de planification.

Fig. 1

Fig. 2

Fig. 3

Fig. 4A

Fig. 4B

Fig. 4C

Fig. 5

Fig. 6

700a　700b　700c　700e　700f　700g　700d

Fig. 7A

time

700g　700e　700f　700d

Fig. 7B

time

700g　700d　700e　700f

Fig. 7C

time

710a　710b　710c　710e　710f　710g　710d
700a　700b　700c　700e　700f　700g　700d

Fig. 7D

time

T

800a   800b   800c   800d   800e   800f   800g   800h   800i

time

Fig. 8A

T

800b   800e   800f   800h   800i   800a   800c   800d   800g

time

Fig. 8B

Δ

T

800a   800b   800c   800d   800e   800f   800g   800h   800i

time

Fig. 8C

T

800b   800e   800f   800h   800g   800a   800i   800c   800d

time

Fig. 8D

Detecting a wireless link failure ⟩ S901

Identifying requests to be postponed ⟩ S902

Identifying non-tagged requests to be put forward ⟩ S903

Postponing requests and putting forward others ⟩ S904

Tagging postponed requests ⟩ S905

Fig. 9

Detecting a wireless link failure ⟩ S1001

Identifying requests to be postponed by a shifting value T ⟩ S1002

Identifying requests to be put forward with an associated constraint Δ compatible with T ⟩ S1003

Postponing requests and putting forward others ⟩ S1004

Updating the constraint Δ ⟩ S1005

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICK W, HA et al.** SS-Trees: A Cross-layer Organizational Approach for Mesh-base Wide-area Wireless Sensor Networks. *2nd IEEE International Conference on Broadband Networks,* October 2005